(19) Europäisches Patentamt

European Patent Office

Office européen des brevets

(11) Veröffentlichungsnummer: **0 588 000 B1**

(12) **EUROPÄISCHE PATENTSCHRIFT**

(45) Veröffentlichungstag der Patentschrift: **30.08.95**

(21) Anmeldenummer: **93109843.8**

(22) Anmeldetag: **21.06.93**

(51) Int. Cl.⁶: **C03C 3/093**

(54) **Chemisch und thermisch hochbelastbares, mit Wolfram verschmelzbares Borosilikatglas.**

(30) Priorität: **12.09.92 DE 4230607**

(43) Veröffentlichungstag der Anmeldung:
**23.03.94 Patentblatt 94/12**

(45) Bekanntmachung des Hinweises auf die
Patenterteilung:
**30.08.95 Patentblatt 95/35**

(84) Benannte Vertragsstaaten:
**BE DE FR GB LU NL**

(56) Entgegenhaltungen:
**AU-B- 467 821**
**GB-A- 2 115 403**

**CHEMICAL ABSTRACTS, vol. 106, no. 24, Juni
1987, Columbus, Ohio, US; abstract no.
200648, Seite 277 ; & SU-A-1 284 959**

**CHEMICAL ABSTRACTS, vol. 77, no. 20, 1972,
Columbus, Ohio, US; abstract no. 129954h,
Seite 221 ; & PROM.ARM. Bd. 1972, Nr. 6,
1972, USSR, S. 44-45**

(73) Patentinhaber: **Schott Glaswerke**
**Hattenbergstrasse 10**
**D-55122 Mainz (DE)**

(84) Benannte Vertragsstaaten:
**BE DE FR GB LU NL**

(73) Patentinhaber: **CARL-ZEISS-STIFTUNG**
**Schott Glaswerke**
**Hattenbergstrasse 10**
**D-55122 Mainz (DE)**

(84) Benannte Vertragsstaaten:
**GB**

(72) Erfinder: **Brix, Peter, Dr.**
**Sertoriusring 307**
**D-6500 Mainz 21 (DE)**

**Beschreibung**

Gegenstand der Erfindung ist ein chemisch und thermisch hochbelastbares, mit Wolfram verschmelzbares Borosilikatglas.

Für Lampenkolben mit einer Einsatztemperatur oberhalb 300 °C werden in der Lampenindustrie die temperaturwechselbeständigen Borosilikatgläser eingesetzt. Diese erst bei größerer Hitze (rund 700 °C) erweichbaren ("zähen") Gläser sind wegen ihres großen Verarbeitungsintervalls ("Länge") hervorragend zur Verarbeitung auf Pressmaschinen oder mit der offenen Flamme (vor der Lampe) geeignet. Eine hohe Einsatztemperatur ist insbesondere dort erwünscht, wo das Glas sehr heiße Umgebungstemperaturen aushalten muß, z.B. bei Blitzlampenröhren oder bei Ofenschaugläsern.

Die Borosilikatgläser zeichnen sich gegenüber den normalen Kalk-Natrongläsern auch durch große Härte, gute Qualität der Glasoberfläche, gute chemische Beständigkeit und verbesserte Isolationsfähigkeit aus. Für eine problemlose Durchführung der Zuleitungsdrähte sind die Gläser in ihrem Ausdehnungsverhalten an Wolfram angepaßt.

Seit Jahren bekannte Gläser dieses Typs sind z.B. in Pfänder, SCHOTT Guide to Glass, van Nostrant Reinhold Company, New York 1983 (ISBN 0-442-27435-1), Seite 110 aufgeführt. Ein neueres Glas der Zusammensetzung ( in Gewichtsprozent 68-82 $SiO_2$; 0,5-5 $Al_2O_3$; 10-18 $B_2O_3$; 3,5-8 $Na_2O$ + $K_2O$ + $Li_2O$; 0-3 $CaO$ + $MgO$; 0,06-1 Läutermittel, ist z. B. in JP-AS92-33741 beschrieben.

In Folge der steigenden Betriebstemperaturen der Lampen nimmt jedoch die Sicherheitsreserve bei den Gläsern, insbesondere in stark temperaturbelasteten Lampenkolben und bei sehr langer Brenndauer immer mehr ab, so daß es wünschenswert ist, diese Gläser in Richtung auf verbesserte Temperaturbeständigkeit weiter zu entwickeln.

Die Aufgabe der vorliegenden Erfindung ist es, Borosilikatglaser mit sehr hohen Glastransformationstemperaturen zu finden, bei denen der obere Kühlpunkt höher als 570 °C liegt. Weiterhin sollen diese Gläser in konventionellen Schmelzaggregaten hergestellt werden können, d.h. die Verarbeitungstemperatur VA soll niedriger als 1285 °C sein, das Verarbeitungsintervall (die Temperaturdifferenz von der Verarbeitungstemperatur VA bis zum Erweichungspunkt EW) soll mindestens 350 °C lang sein, eine Verschmelzbarkeit mit Wolfram muß gegeben sein, die elektrischen Isolationseigenschaften müssen gut sein (TK100 mindestens 240 °C) und das Glas soll eine gute bis sehr gute chemische Beständigkeit aufweisen.

Diese Aufgabe wird durch das in Patentanspruch 1 beschriebene Glas gelöst.

Das Glas enthält 70 bis 78 Gewichtsprozent $SiO_2$. Oberhalb 78 Gewichtprozent wird das Glas zunehmend schwerer verarbeitbar und die Verarbeitungstemperatur VA nimmt unzulässige Werte an. Als Verarbeitungstemperatur VA wird die Temperatur in °C angegeben, bei der das Glas die Viskosität von $10^4$ dPas besitzt. Unterhalb eines Gehaltes von 70 Gewichtsprozent $SiO_2$ nimmt die thermische Ausdehnung des Glases zu, so daß die Verschmelzanpassung an das Wolframmetall der Glasdurchführung nicht mehr gewährleistet werden kann. Besonders bevorzugt wird ein Gehalt von 73 bis 75 Gewichtprozent $SiO_2$.

Zur Erzielung einer guten chemischen Beständigkeit, Entglasungsstabilität und elektrischen Isolationsfähigkeit besitzt das Glas einen Gehalt an $B_2O_3$ von 9-12 Gewichtsprozent. In den angegebenen Grenzen erleichtert der $B_2O_3$-Gehalt auch als Flußmittel die Schmelzbarkeit der Gläser.

Der $Al_2O_3$-Gehalt der Gläser liegt zwischen 1,5 und 4 Gewichtsprozent. Bei Verwendung höherer $Al_2O_3$-Anteile steigt die Verarbeitungstemperartur auf zu hohe Werte an und die Tendenz zur Phasentrennung nimmt zu, während bei Unterschreiten der Untergrenze von 1,5 Gewichtsprozent die Entglasungstendenz deutlich ansteigt. Besonders günstige Ergebnisse werden bei einem Gehalt von 2 bis 3 Gewichtsprozent $Al_2O_3$ erreicht.

Alkalioxide sollen in einer Menge von insgesamt 5 bis 7 Gewichtsprozent in dem Glas vorhanden sein. Sie dienen als Flussmittel zur Erreichung einer besseren Schmelzbarkeit der Gläser und zur Einstellung der thermischen Dehnung, welche außerhalb dieses Bereichs nicht die gewünschten Werte erreicht. Dabei sollen die Gehalte an $Na_2O$ und $K_2O$ jeweils zwischen 1 und 5 Gewichtsprozent liegen. Das Glas kann ferner 0 bis zu 4 Gewichtsprozent $Li_2O$ enthalten, bevorzugt wird jedoch ein $Li_2O$-freies Glas. Es wird ferner bevorzugt, wenn der $Na_2O$-Gehalt zwischen 1 und 3 und der $K_2O$-Gehalt zwischen 3 und 5 Gewichtsprozent liegt. Es hat sich ferner herausgestellt, daß die Isolationsfähigkeit des Glases ansteigt, wenn daß Gewichtsverhältnis $K_2O$ zu $Na_2O$ größer als 1 ist. Dieses Gewichtsverhältnis wird daher bevorzugt.

Um die Glastransformationstemperatur anzuheben, enthalten die Gläser ferner 0 bis 3 Gewichtsprozent $MgO$, 1 bis 3 Gewichtsprozent $CaO$ und 0 bis 2 Gewichtsprozent $BaO$. $BaO$ kann auch ganz oder teilweise durch $SrO$ ersetzt werden. Neben den Erdalkalioxiden enthält das Glas ferner 0 bis 2 Gewichtsprozent $ZnO$ und 0,5 bis 3 Gewichtsprozent $ZrO_2$. $ZrO_2$ verbessert die chemische Resistenz, jedoch soll der Gehalt nicht über 3 Gewichtsprozent ansteigen, da sich solche Gläser nur noch schwer ohne Schmelzrelikte aufschmelzen lassen. Der Gesamtgehalt der Erdalkalioxide + $ZnO$ + $ZrO_2$ soll zwischen 6 und 10 Gewichtsprozent liegen. Bei Unterschreiten dieses Bereichs kann die gewünschte hohe Transformationstemperatur nicht mehr erreicht werden, bei Überschreiten des Bereichs kann, insbesondere bei der Verwendung von MgO und BaO, Phasentrennung auftreten, so daß keine brauchbaren Gläser erhalten werden. Bevorzugt wird es daher, wenn auf die Erdalkalioxide außer Calciumoxid, das bevorzugt in einer Menge von 2 bis 3 Gewichtsprozent zur Anwendung kommt, ganz verzichtet wird. ZnO kommt bevorzugt in einer Menge von 1 bis 2 Gewichtsprozent und $ZrO_2$ in einer Menge von 2 bis 3 Gewichtsprozent zur Anwendung.

Eine bevorzugte Anwendung dieses Glases ist die Verwendung als Lampenkolbenglas für thermisch hochbelastbare Lampen. Diese bei hohen Temperaturen betriebenen Lampen senden bereits erhebliche Mengen an UV-Strahlung aus. Falls diese Strahlung unerwünscht ist, kann dem Glas noch $TiO_2$ in Mengen von bis zu 1,5 Gewichtsprozent, bevorzugt 0,5 bis 1 Gewichtsprozent zugegeben werden, wodurch die UV-Strahlung ganz erheblich vermindert wird.

Aufgrund der hohen thermischen Belastbarkeit besteht eine weitere bevorzugte Anwendung des Glases in seiner Verwendung als Brandschutzsicherheitsglas in Brandschutzverglasungen.

Das Glas kann mit üblichen Läutermitteln wie $As_2O_3$, $Sb_2O_3$, $CeO_2$, NaCl, $CaF_2$ oder NaF geläutert werden, die je nach Menge und verwendetem Typ des Läutermittels in Mengen von 0,05 bis 1 Gewichtsprozent im fertigen Glas anzutreffen sind.

Beispiele:

42 verschieden zusammengesetzte Gläser wurden aus herkömmlichen Rohstoffen bei 1620 °C erschmolzen, 1 1/2 Stunden bei dieser Temperatur geläutert, und anschließend 30 Minuten lang bei 1550 °C zur Homogenisierung gerührt. Die Zusammensetzung von 41 Gläsern in Gewichtsprozenten ist in Tabelle 1, die physikalischen Werte dieser Gläser sind in Tabelle 2 angeführt.

Die Gläser Nr. 4, 25, 27, 29-34 und 36 bis 41 haben die erfindungsgemäße Zusammensetzung, die Gläser Nr. 1-3, 5-24, 26, 28, 35 dienen zum Vergleich. Sie demonstrieren die Anfälligkeit des erfindungsgemäßen Glassystems hinsichtlich einer Entmischung oder einer Abweichung von den gewünschten physikalischen Werten bereits bei geringfügiger Überschreitung der erfindungsgemäßen Grenzbereiche.

Bei dem Glas Nr. 41 wurde zusätzlich die Säurebeständigkeit nach DIN 12116 sowie die Laugenbeständigkeit nach DIN 52322 (ISO 675) bestimmt. Das Glas liegt in beiden Fällen innerhalb der ersten Säure- bzw. Laugenklasse. Da es auch in der ersten Hydrolytischen Klasse nach DIN 12111 liegt, wird deutlich, daß es sich um chemisch hochresistente Gläser handelt. Dies ermöglicht auch ihren Einsatz im chemischen Apparatebau, z.ß. für Ofenschaugläser.

Zur Demonstration der Verminderung UV-Emission durch einen Zusatz von $TiO_2$ wurde das Beispiel Nr. 41 wiederholt, mit der Abweichung, daß der $SiO_2$-Gehalt um 0,5 Gewichtsprozent (absolut auf 73,7 Gewichtsprozent) gesenkt wurde und stattdessen 0,5 Gewichtsprozent TiO2 zugesetzt wurde. Die Transmission von UV-Licht bei einer Wellenlänge von 296,7 nm und 1 mm Probendicke betrug bei dem Glas Nr. 41 (ohne TiO2-Zusatz) 58,5 % und ging nach dem Zusatz von 0,5 Gewichtsprozent $TiO_2$ auf 11,5 Prozent zurück. Die Transmission im sichtbaren Bereich des Spektrums blieb praktisch unverändert.

Tabelle 1 Synthesewerte der Gläser in Gewichtsprozenten.
Die Gläser enthalten zur Läuterung zusätzlich je
1,50% NaCl.

| Nr. | $SiO_2$ | $B_2O_3$ | $Al_2O_3$ | $Na_2O$ | $K_2O$ | $MgO$ | $CaO$ | $BaO$ | $ZnO$ | $ZrO_2$ |
|---|---|---|---|---|---|---|---|---|---|---|
| 1 | 80,00 | 9,00 | 1,50 | 1,00 | 3,00 | 0,50 | 3,00 | 1,00 | 0,50 | 0,50 |
| 2 | 67,50 | 15,00 | 1,50 | 1,00 | 3,00 | 3,00 | 3,00 | 1,00 | 2,00 | 3,00 |
| 3 | 65,00 | 9,00 | 6,00 | 1,00 | 3,00 | 3,00 | 3,00 | 5,00 | 2,00 | 3,00 |
| 4 | 73,50 | 9,00 | 1,50 | 5,00 | 1,00 | 3,00 | 1,00 | 1,00 | 2,00 | 3,00 |
| 5 | 64,00 | 15,00 | 6,00 | 5,00 | 3,00 | 0,50 | 3,00 | 1,00 | 2,00 | 0,50 |
| 6 | 64,00 | 15,00 | 1,50 | 5,00 | 3,00 | 3,00 | 1,00 | 5,00 | 2,00 | 0,50 |
| 7 | 67,50 | 15,00 | 6,00 | 1,00 | 3,00 | 0,50 | 1,00 | 1,00 | 2,00 | 3,00 |
| 8 | 65,00 | 15,00 | 6,00 | 5,00 | 1,00 | 3,00 | 3,00 | 1,00 | 0,50 | 0,50 |
| 9 | 71,50 | 9,00 | 1,50 | 5,00 | 3,00 | 0,50 | 1,00 | 5,00 | 0,50 | 3,00 |
| 10 | 72,00 | 9,00 | 6,00 | 3,00 | 1,00 | 0,50 | 1,00 | 5,00 | 2,00 | 0,50 |
| 11 | 69,50 | 15,00 | 1,50 | 1,00 | 3,00 | 3,00 | 1,00 | 5,00 | 0,50 | 0,50 |
| 12 | 69,50 | 9,00 | 6,00 | 5,00 | 3,00 | 3,00 | 1,00 | 1,00 | 2,00 | 0,50 |
| 13 | 62,50 | 9,00 | 6,00 | 5,00 | 3,00 | 3,00 | 3,00 | 5,00 | 0,50 | 3,00 |
| 14 | 69,00 | 15,00 | 6,00 | 3,00 | 1,00 | 0,50 | 1,00 | 1,00 | 0,50 | 3,00 |
| 15 | 64,00 | 15,00 | 1,50 | 5,00 | 1,00 | 0,50 | 3,00 | 5,00 | 2,00 | 3,00 |
| 16 | 72,90 | 14,15 | 1,65 | 1,00 | 2,75 | 1,90 | 2,95 | 1,65 | | 1,05 |
| 17 | 75,40 | 12,50 | 2,50 | 1,50 | 2,60 | 2,00 | 3,00 | | 0,50 | |
| 18 | 73,60 | 15,00 | 1,50 | 1,00 | 2,90 | 2,00 | 3,00 | | | 1,00 |
| 19 | 75,00 | 13,00 | 1,50 | 1,00 | 3,10 | 1,75 | 3,00 | 1,65 | | |
| 20 | 74,80 | 13,00 | 1,50 | 2,95 | 1,25 | 0,50 | 3,00 | | | 3,00 |
| 21 | 76,40 | 12,00 | 1,50 | 3,60 | 1,00 | 0,80 | 3,00 | 0,60 | | 1,10 |
| 22 | 73,70 | 11,00 | 2,00 | 4,10 | | 2,30 | 3,00 | | 1,60 | 2,30 |
| 23 | 73,20 | 12,00 | 1,50 | 4,50 | | | 4,85 | | 2,00 | 1,95 |
| 24 | 74,00 | 12,00 | 3,00 | 1,90 | 3,00 | | 3,10 | | | 3,00 |
| 25 | 74,70 | 11,00 | 2,00 | 2,40 | 3,00 | | 2,40 | | 2,00 | 2,50 |
| 26 | 71,00 | 12,00 | 3,20 | 1,90 | 3,00 | | 2,60 | | 2,50 | 3,80 |
| 27 | 77,60 | 9,00 | 1,50 | 2,50 | 2,95 | | 2,35 | | 1,60 | 2,50 |
| 28 | 75,50 | 10,00 | 5,00 | 6,00 | | | 1,50 | 2,00 | | |
| 29 | 75,45 | 10,00 | 2,50 | 2,00 | 3,60 | | 2,35 | | 1,60 | 2,50 |
| 30 | 75,90 | 10,00 | 2,00 | 2,20 | 3,45 | | 2,35 | | 1,60 | 2,50 |
| 31 | 75,05 | 10,00 | 2,50 | 2,00 | 4,00 | | 2,35 | | 1,60 | 2,50 |
| 32 | 74,80 | 10,00 | 2,50 | 2,00 | 4,25 | | 2,35 | | 1,60 | 2,50 |
| 33 | 74,25 | 11,00 | 2,50 | 2,30 | 3,50 | | 2,35 | | 1,60 | 2,50 |
| 34 | 73,65 | 10,00 | 3,50 | 3,05 | 2,70 | | 3,00 | | 1,60 | 2,50 |
| 35 | 72,85 | 10,00 | 3,50 | 2,00 | 3,80 | | 3,25 | | 1,60 | 3,00 |
| 36 | 74,50 | 10,00 | 2,50 | 2,00 | 4,55 | | 2,35 | | 1,60 | 2,50 |
| 37 | 73,50 | 11,05 | 2,90 | 2,00 | 4,25 | | 2,70 | | 1,60 | 2,00 |
| 38 | 73,60 | 11,05 | 2,90 | 2,00 | 4,15 | | 2,70 | | 1,60 | 2,00 |
| 39 | 73,60 | 11,10 | 2,90 | 2,20 | 3,90 | | 2,70 | | 1,60 | 2,00 |
| 40 | 73,70 | 11,10 | 2,90 | 2,20 | 3,80 | | 2,70 | | 1,60 | 2,00 |
| 41 | 74,20 | 11,10 | 2,90 | 1,70 | 3,80 | | 2,70 | | 1,60 | 2,00 |

## Tabelle 2 Eigenschaften der Gläser

| Nr. | Trüb[1] | alpha[2] | Tg[3] | OKP[4] | EW[5] | VA[6] | D1[7] | TK100[8] | H[9] |
|---|---|---|---|---|---|---|---|---|---|
| 1 | 2 | 3,62 | 599 | 636 | 915 | 1320 | 2,320 | 322 | 26 |
| 2 | 2 | 4,67 | 621 | 648 | 919 | 1252 | 2,487 | 250 | 47 |
| 3 | 5 | 4,16 | 585 | 598 | 878 | 1186 | 2,389 | 337 | 83 |
| 4 | 0 | 4,50 | 579 | 597 | 831 | 1210 | 2,410 | 240 | 29 |
| 5 | 0 | 5,53 | 566 | 570 | 763 | 1089 | 2,397 | 229 | 28 |
| 6 | 0 | 5,47 | 561 | 567 | 753 | 1051 | 2,478 | 297 | 69 |
| 7[10] | 0 | 4,03 | 559 | 593 | 863 | 1338 | 2,312 | 280 | 9 |
| 8 | 2 | 5,20 | 585 | 622 | 794 | 1124 | 2,375 | 189 | 63 |
| 9 | 0 | 5,34 | 594 | 603 | 817 | 1149 | 2,493 | 267 | 20 |
| 10 | 0 | 4,25 | 589 | 587 | 873 | 1328 | 2,398 | 202 | 8 |
| 11 | 6 | 4,16 | 578 | 608 | 855 | 1176 | 2,384 | 352 | 381 |
| 12 | 0 | 5,44 | 577 | 585 | 808 | 1203 | 2,398 | 218 | 18 |
| 13 | 0 | 6,01 | 598 | 600 | 808 | 1126 | 2,530 | 240 | 29 |
| 14 | 0 | 4,00 | 565 | 580 | 847 | 1313 | 2,299 | 227 | 9 |
| 15 | 1 | 4,94 | 573 | 583 | 810 | 1071 | 2,601 | 280 | 84 |
| 16 | 3 | 3,92 | 587 | 608 | 880 | 1260 | 2,304 | 290 | 62 |
| 17 | 2 | 3,87 | 591 | 610 | 872 | 1222 | 2,335 | 330 | 76 |
| 18 | 3 | 3,78 | 584 | 600 | 867 | 1225 | 2,301 | 339 | 67 |
| 19 | 3 | 3,95 | 591 | 616 | 876 | 1227 | 2,327 | 338 | 60 |
| 20 | 1 | 3,75 | 584 | 616 | 865 | 1234 | 2,325 | 268 | 43 |
| 21 | 2 | 3,98 | 574[11] | 627 | 861 | 1205 | 2,330 | 260 | 223 |
| 22 | 2 | 4,15 | 577 | 637 | 881 | 1215 | 2,367 | 217 | 64 |
| 23 | 6 | | | | | | | | |
| 24 | 1 | | | | | | | | |
| 25 | 0 | 4,03 | 575 | 605 | 847 | 1240 | 2,353 | 283 | 13 |
| 26 | 0,5 | 4,05 | 589 | 603 | 859 | 1261 | 2,364 | 268 | 15 |
| 27 | 0 | 3,95 | 589 | 617 | 859 | 1271 | 2,355 | 285 | 16 |
| 28 | 0 | 4,65 | 589 | 597 | 816 | 1208 | 2,353 | 180 | 12 |
| 29 | 0 | 3,98 | 589 | 610 | 865 | 1283 | 2,345 | 283 | 9 |
| 30 | 0 | 4,07 | 585 | 611 | 848 | 1257 | 2,353 | 287 | 9 |
| 31 | 0 | 4,19 | 589 | 609 | 870 | 1260 | 2,365 | 287 | 10 |
| 32 | 0 | 4,23 | 589 | 610 | 864 | 1255 | 2,358 | 288 | 11 |
| 33 | 0 | 4,14 | 580 | 603 | 870 | 1241 | 2,349 | 280 | 15 |
| 34 | 0 | 4,40 | 597 | 609 | 848 | 1254 | 2,365 | 240 | 14 |
| 35 | 0,5 | | | | | | | | |
| 36 | 0 | 4,35 | 591 | 606 | 847 | 1252 | 2,361 | 290 | 12 |
| 37 | 0 | 4,32 | 587 | 601 | 837 | 1234 | 2,353 | 283 | 15 |
| 38 | 0 | 4,36 | 585 | 603 | 842 | 1232 | 2,350 | 283 | 13 |
| 39 | 0 | 4,37 | 589 | 602 | 834 | 1225 | 2,354 | 278 | 17 |
| 40 | 0 | 4,31 | 588 | 604 | 838 | 1244 | 2,352 | 273 | 13 |
| 41 | 0 | 4,25 | 599 | 606 | 858 | 1256 | 2,348 | 286 | 14 |

[1] visuelle Beurteilung der Trübung auf einer Skala von 0 bis 10
[2] thermische Dehnung in $10^{-6}K^{-1}$ im Temperaturbereich 20 bis 300°C
[3] dilatometrische Glastransformationstemperatur in °C
[4] Oberer Kühlpunkt. Temperatur für die $10^{13}$dPas-Viskosität in °C
[5] Erweichungspunkt. Temperatur für die $10^{7,6}$dPas-Viskosität in °C
[6] Verarbeitungstemperatur. Temperatur für die $10^{4}$dPas-Viskosität in °C
[7] Dichte des Glases in $10^{3}$ kg·m$^{-3}$
[8] Temperatur bei $10^{8}$ Ohm·cm nach DIN 52326
[9] Hydrolytische Beständigkeit in µg Na$_2$O/g nach DIN 12111
[10] teilweise ungelöste Schmelzrelikte.
[11] bei 630°C ein weiterer Tg

## Patentansprüche

1. Chemisch hochresistentes, mit Wolfram verschmelzbares Borosilikatglas mit einer Glastransformationstemperatur größer 570° C, einer thermischen Dehnung zwischen 3,95 und 4,5 $10^{-6}K^{-1}$, einer hydrolytischen Beständigkeit nach DIN 12111 in der ersten Klasse und einem TK100-Wert nach DIN 52326 von mindestens 240° C, mit einer Zusammensetzung (in Gew.-% auf Oxidbasis) von

| | |
|---|---|
| $SiO_2$ | 70 - 78 |
| $B_2O_3$ | 9 - 12 |
| $Al_2O_3$ | 1,5 - 4 |
| $Li_2O$ | 0 - 4 |
| $Na_2O$ | 1 - 5 |
| $K_2O$ | 1 - 5 |
| $\Sigma\ Na_2O + K_2O + Li_2O$ | 5 - 7 |
| $MgO$ | 0 - 3 |
| $CaO$ | 1 - 3 |
| $BaO + SrO$ | 0 - 2 |
| $ZnO$ | 0 - 2 |
| $ZrO_2$ | 0,5 - 3 |
| $\Sigma\ MgO + CaO + BaO + SrO + ZnO + ZrO_2$ | 6 - 10 |

sowie ggfls. zusätzliche Läutermittel wie $As_2O_3$, $Sb_2O_3$ oder $NaCl$ in den üblichen Mengen.

2. Borosilikatglas nach Anspruch 1, mit einer Zusammensetzung von

| | |
|---|---|
| $SiO_2$ | 73 - 75 |
| $B_2O_3$ | 9 - 12 |
| $Al_2O_3$ | 2 - 3 |
| $Na_2O$ | 1 - 3 |
| $K_2O$ | 3 - 5 |
| $CaO$ | 2 - 3 |
| $ZnO$ | 1 - 2 |
| $ZrO_2$ | 2 - 3 |
| $\Sigma\ CaO + ZnO + ZrO_2$ | > 6 |

3. Borosilikatglas nach den Ansprüchen 1 oder 2, gekennzeichet durch ein Gewichtsverhältnis von $K_2O$ / $Na_2O > 1$.

4. Borosilikatglas nach wenigstens einem der Ansprüche 1 bis 3, gekennzeichnet durch einen Gehalt von $TiO_2$ von bis zu 1,5 Gew.-%.

5. Verwendung des Borosikikatglases nach wenigstens einem der Ansprüche 1 bis 4 als Lampenkolbenglas für thermisch hochbelastbare Lampen.

6. Verwendung des Borosilikatglases nach wenigstens einem der Ansprüche 1 bis 4 als Brandschutzsicherheitsglas.

**Claims**

1. Chemically highly-resistant borosilicate glass which is fusible with tungsten, having a glass transformation temperature greater than 570°C, a thermal expansion of between 3.95 and 4.5 $10^{-6}$/K, a Class 1 hydrolytic resistance to DIN 12111 and a TK100 value to DIN 52326 of at least 240°C, having the following composition (as wt-% based on oxide):

| SiO$_2$ | 70 - 78 |
|---|---|
| B$_2$O$_3$ | 9 - 12 |
| Al$_2$O$_3$ | 1.5 - 4 |
| Li$_2$O | 0 - 4 |
| Na$_2$O | 1 - 5 |
| K$_2$O | 1 - 5 |
| $\Sigma$Na$_2$O + K$_2$O + Li$_2$O | 5 - 7 |
| MgO | 0 - 3 |
| CaO | 1 - 3 |
| BaO + SrO | 0 - 2 |
| ZnO | 0 - 2 |
| ZrO$_2$ | 0.5 - 3 |
| $\Sigma$MgO + CaO + BaO + SrO + ZnO + ZrO$_2$ | 6 - 10 |

and optionally conventional quantities of additional refining agents such as As$_2$O$_3$, Sb$_2$O$_3$ or NaCl.

2. Borosilicate glass according to Claim 1, having the following composition:

| SiO$_2$ | 73 - 75 |
|---|---|
| B$_2$O$_3$ | 9 - 12 |
| Al$_2$O$_3$ | 2 - 3 |
| Na$_2$O | 1 - 3 |
| K$_2$O | 3 - 5 |
| CaO | 2 - 3 |
| ZnO | 1 - 2 |
| ZrO$_2$ | 2 - 3 |
| $\Sigma$CaO + ZnO + ZrO$_2$ | > 6 |

3. Borosilicate glass according to Claims 1 or 2, characterised by a ratio by weight of K$_2$O : Na$_2$O greater than 1.

4. Borosilicate glass according to at least one of Claims 1 to 3, characterised in that it contains up to 1.5 wt-% TiO$_2$.

5. Use of the borosilicate glass according to at least one of Claims 1 to 4 as a lightbulb glass for thermally resistant lights.

6. Use of the borosilicate glass according to at least one of Claims 1 to 4 as a fire protection safety glass.

**Revendications**

1. Verre borosilicaté à haute résistance chimique et soudable avec du tungstène, présentant une température de transition vitreuse supérieure à 570 °C, un coefficient de dilatation thermique compris entre 3,95 10$^{-6}$ K$^{-1}$ et 4,5 10$^{-6}$ K$^{-1}$, une résistance à l'hydrolyse selon DIN 12111 le classant dans la première classe et une valeur TK100 selon DIN 52326 au moins égale à 240 °C, ayant la composition suivante (en % en poids par rapport à la somme des oxydes):

| | |
|---|---|
| $SiO_2$ | 70 - 78 |
| $B_2O_3$ | 9 - 12 |
| $Al_2O_3$ | 1,5 - 4 |
| $Li_2O$ | 0 - 4 |
| $Na_2O$ | 1 - 5 |
| $K_2O$ | 1 - 5 |
| $\Sigma Na_2O + K_2O + Li_2O$ | 5 - 7 |
| $MgO$ | 0 - 3 |
| $CaO$ | 1 - 3 |
| $BaO + SrO$ | 0 - 2 |
| $ZnO$ | 0 - 2 |
| $ZrO_2$ | 0,5 - 3 |
| $\Sigma\ MgO + CaO + BaO + SrO + ZnO + ZrO_2$ | 6 - 10 |

ainsi qu'éventuellement des agents d'affinage supplémentaires, tels que $As_2O_3$, $Sb_2O_3$ ou $NaCl$ en quantités habituelles.

2. Verte borosilicaté conforme à la revendication 1 ayant la composition suivante :

| | |
|---|---|
| $SiO_2$ | 73 - 75 |
| $B_2O_3$ | 9 - 12 |
| $Al_2O_3$ | 2 - 3 |
| $Na_2O$ | 1 - 3 |
| $K_2O$ | 3 - 5 |
| $CaO$ | 2 - 3 |
| $ZnO$ | 1 - 2 |
| $ZrO_2$ | 2 - 3 |
| $\Sigma\ CaO + ZnO + ZrO_2$ | > 6 |

3. Verte borosilicaté conforme à la revendication 1 ou 2, caractérisé par un rapport en poids $K_2O/N_2O > 1$.

4. Verte borosilicaté conforme à au moins une des revendications 1 à 3, caractérisé par une teneur en $TiO_2$ allant jusqu'à 1,5 % en poids.

5. Utilisation du verte borosilicaté conforme à au moins une des revendication 1 à 4 comme verte pour ampoules de lampes destinées à des lampes à haute résistance thermique.

6. Utilisation du verte borosilicaté conforme à au moins une des revendications 1 à 4 comme verte de sécurité anti-feu.